# EUROPÄISCHE PATENTSCHRIFT

(11) **EP 1 428 625 B1**
(45) Veröffentlichungstag und Bekanntmachung des Hinweises auf die Patenterteilung: **02.06.2010**
(21) Anmeldenummer: 03027173.8
(22) Anmeldetag: 27.11.2003
(51) Int. Cl.: B24B 23/04, B24B 41/04

(54) **Oszillationsantrieb**
Oscillating drive
Mécanisme d'entraînement oscillant

(30) Priorität: 13.12.2002 DE 10260213
(43) Veröffentlichungstag der Anmeldung: 16.06.2004
(73) Patentinhaber: C. & E. Fein GmbH, 73529 Schwäbisch-Gmünd-Bargau (DE)
(72) Erfinder: Jasch, Michael, 72793 Pfullingen (DE)
(74) Vertreter: Gahlert, Stefan

(56) Entgegenhaltungen:
- US-A- 2 350 098
- US-A- 4 252 121
- US-A- 4 922 612

## Beschreibung

Die Erfindung betrifft einen Oszillationsantrieb mit einer rotierend antreibbaren Antriebswelle, von der eine Abtriebswelle zum Antrieb eines Werkzeugs um ihre Längsachse oszillierend antreibbar ist, und mit einem Exzenter, der mit einer Exzentergabel zum oszillierenden Antrieb der Abtriebswelle zusammenwirkt, wobei der Exzenter von einer Exzenterwelle rotierend antreibbar ist, die parallel zur Abtriebswelle angeordnet ist und die Exzentergabel mit einem ersten Ende starr mit der Abtriebswelle verbunden ist und mit einem zweiten Ende am Exzenter geführt ist, der an der Exzenterwelle ausgebildet ist.

Ein derartiger Oszillationsantrieb ist aus der US 4,252,121 bekannt.

Bei dem bekannten Oszillationsantrieb wird ein Werkzeug, etwa in Form eines Schneidmessers, in einer Ebene oszillierend angetrieben, die senkrecht zur Motorantriebswelle ausgerichtet ist.

Als nachteilig ist hierbei die Anordnung des Werkzeugs in Bezug auf den Oszillationsantrieb anzusehen.

Aus der US-A-2,350,098 ist eine Schleifmaschine bekannt, bei der von einer Motorwelle über ein Kegelradgetriebe eine Zwischenwelle angetrieben wird. An dieser Zwischenwelle sitzt ein Exzenterelement, an dem eine Exzentergabel angreift, die an einem Schwenkzapfen verschwankbar gelagert ist und an ihrem gegenüberliegenden Ende eine Aufnahme für einen Arbeitsstift aufweist, an dem ein Schleifelement auf einem Kreisabschnitt hin- und heroszillierend angetrieben ist.

Mit einer derartigen Schleifmaschine lässt sich zwar grundsätzlich eine verbesserte Schleifleistung gegenüber herkömmlichen Schleifmaschinen erzielen, jedoch ist ein derartiges Gerät ungeeignet, um Schleifarbeiten unter räumlich eng begrenzten Verhältnissen auszuführen, wie sie etwa in Eckbereichen und entlang von Innenkanten vorkommen.

Ein weiterer Oszillationsantrieb und eine davon angetriebene Werkzeugmaschine sind aus der EP-A-0 372 376 bekannt.

Bei dem bekannten Oszillationsantrieb wird die rotierende Antriebsbewegung eines Exzenterelementes über ein Drehlager, kombiniert mit einem bezüglich einer Drehachse desselben allseitig kippbaren Kippgelenk, in eine oszillierend Antriebsbewegung um die Drehachse der Abtriebswelle umgesetzt.

Der Aufbau dieses Oszillationsantriebs ist relativ aufwändig. Es sind Speziallager für den Exzenter erforderlich. Auch kann sich durch die in mehreren Freiheitsgraden erfolgenden Taumelbewegungen ein vorzeitiger Verschleiß ergeben.

Der Erfindung liegt die Aufgabe zugrunde, einen verbesserten Oszillationsantrieb zu schaffen, der einen einfachen Aufbau aufweist, einen möglichst geringen Verschleiß im Dauerbetrieb besitzt und auch für die Übertragung höherer Leistungen geeignet ist. Ferner soll eine Werkzeugmaschine mit einem derartigen Oszillationsantrieb angegeben werden. Dabei soll sich der einfache Aufbau insbesondere darin manifestieren, dass auf eine zusätzliche Drehzahlregelung verzichtet werden Kann und dennoch eine gewünschte Leerlaufabtriebsdrehzahl von etwa 12.000 bis 25.000 Schwingungen pro Minute erzielt wird.

Diese Aufgabe wird erfindungsgemäß bei einem Oszillationsantrieb gemäß der eingangs genannten Art dadurch gelöst, dass die Exzenterwelle winklig zur Antriebswelle angeordnet und mit dieser über ein Winkelgetriebe gekoppelt ist, wobei die Antriebswelle auf der dem Exzenter zugewandten Seite gelagert ist, und dass das Winkelgetriebe ein Untersetzungsgetriebe mit einem Untersetzungsverhältnis zwischen 1:1, 2 und 1:4 aufweist.

Die Aufgabe der Erfindung wird auf diese Weise vollkommen gelöst.

Erfindungsgemäß ist die Exzenterwelle winklig zur Antriebswelle angeordnet und mit dieser über ein Winkelgetriebe gekoppelt. Ferner sind die Exzenterwelle und die Abtriebswelle parallel angeordnet. Auf diese Weise kann die Verwendung von Drehschwenklagern vermieden werden. Statt dessen ist es möglich, zwischen Exzenter und Exzentergabel eine einfache Gleitführung zu verwenden und hierbei eine linienförmige Berührung zu erzielen. Auf diese Weise wird ein deutlich gleichmäßigerer Lauf mit geringeren Vibrationen erzielt und die Lebensdauer selbst bei höheren Leistungen erhöht.

Das Winkelgetriebe ist als ein Untersetzungsgetriebe ausgebildet und weist ein Untersetzungsverhältnis zwischen 1:1,2 und 1:4 auf. So ist es möglich, auf diese Weise einen herkömmlichen Universalmotor zum Antrieb zu verwenden, um die Abtriebswelle in Oszillationen zu versetzen. Mit einem herkömmlichen Universalmotor kann ein Oszillationsantrieb mit einer Leerlaufabtriebsdrehzahl von etwa 12.000 bis 25.000 Schwingungen pro Minute ohne zusätzliche Drehzahlregelung erzielt werden.

Die Drehzahlkennlinie der Abtriebswelle ermöglicht hierbei ein problemloses Arbeiten bei typischen Anwendungen, wie etwa Schleifen, Sägen und Schneiden. Hierdurch ergibt sich ein erheblicher Kostenvorteil. Außerdem ergibt sich dadurch, dass ein herkömmlicher Universalmotor anstelle eine sonst notwendigen Unterspannungsmotors verwendet werden kann, ein günstigeres Leistungsgewicht.

Gleichzeitig wird durch eine höhere Motordrehzahl auch die Kühlung des Motors verbessert, was höhere Leistungen ermöglicht bzw. der Lebensdauer zugute kommt.

In bevorzugter Weiterbildung der Erfindung weist hierbei der Exzenter eine zylindrische Außenfläche auf, mit der die Exzentergabel zusammenwirkt.

Hierbei kann die zylindrische Außenfläche des Exzenters unmittelbar in einem geeigneten Ausschnitt der Exzentergabel geführt sein. Darüber hinaus ist es möglich, auf der zylindrischen Außenfläche des Exzenters eine Laufbuchse oder ein anders ausgebildetes Lager vorzusehen, dessen Außenfläche im Ausschnitt der Exzentergabel geführt ist.

Das Winkelgetriebe ist vorzugsweise als Kegelradgetriebe ausgebildet.

Auf diese Weise können große Leistungen relativ verlustarm und geräuscharm übertragen werden. In der Regel wird das Winkelgetriebe einen Winkel von 90° zwischen Antriebswelle und Abtriebswelle ermöglichen. Dagegen ist es grundsätzlich auch möglich, andere Winkel zwischen Abtriebswelle und Abtriebswelle über das Winkelgetriebe zu erzielen, sofern dies für spezielle Anwendungen gewünscht ist.

Gemäß einer weiteren Ausführung der Erfindung ist das Getriebe als mechanisch schaltbares, gestuftes oder stufenloses Getriebe ausgebildet.

Auf diese Weise können verschiedene Übersetzungsverhältnisse mechanisch eingestellt werden, ohne dass hierzu eine elektronische Steuerung notwendig ist. Es kann sich hierbei ggf. auch um ein Vorschaltgetriebe handeln, das zwischen Motor und dem vorzugsweise als Winkelgetriebe ausgebildeten Getriebe zum Antrieb der Exzenterwelle ausgebildet ist.

Gemäß einer weiteren Ausführung weist der Universalmotor eine elektronische Steuerung, wie etwa eine Phasenanschnittsteuerung, auf.

Auf diese Weise kann für bestimmte Anwendungen eine Drehzahlreduzierung elektronisch realisiert werden.

Weitere Vorteile der Erfindung ergeben sich aus der nachfolgenden Beschreibung eines bevorzugten Ausführungsbeispiels unter Bezugnahme auf die Zeichnung. Es zeigen:
- Fig. 1: eine teilweise geschnittene, teilweise perspektivische Ansicht eines Elektrowerkzeugs mit einem erfindungsgemäßen Oszillationsantrieb in stark vereinfachter, nicht notwendiger maßstabsgetreuer Darstellung, wobei lediglich der Bereich des Oszillationsantriebs dargestellt ist;
- Fig. 2: eine teilweise geschnittene Teilansicht des Elektrowerkzeuges gemäß Fig. 1 in vergrößerter Darstellung und
- Fig. 3: eine Aufsicht auf die Exzentergabel mit der zugeordneten Exzenterwelle und Abtriebswelle in vergrößerter Darstellung.

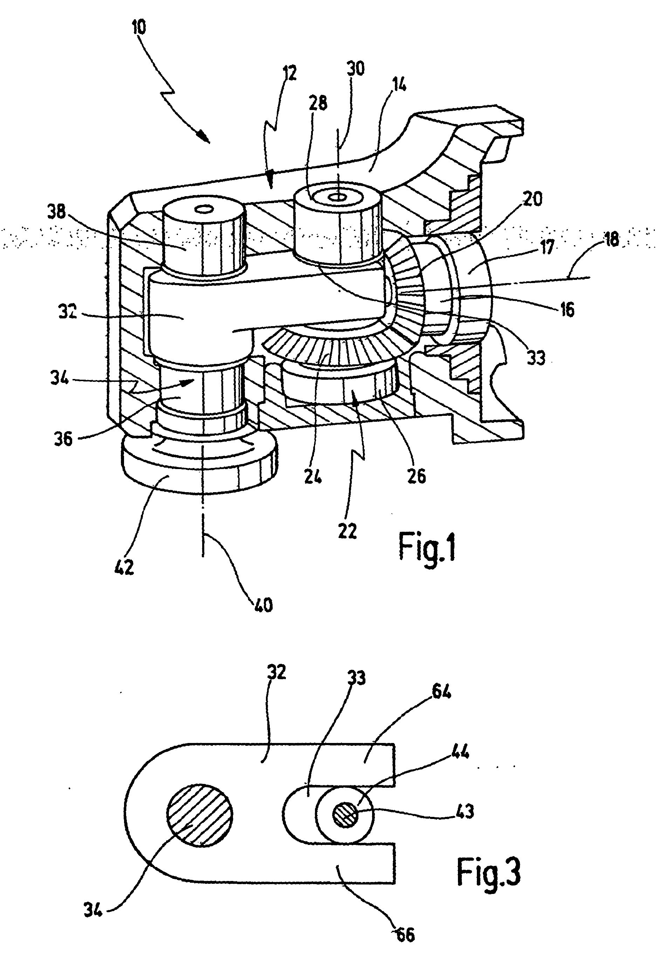

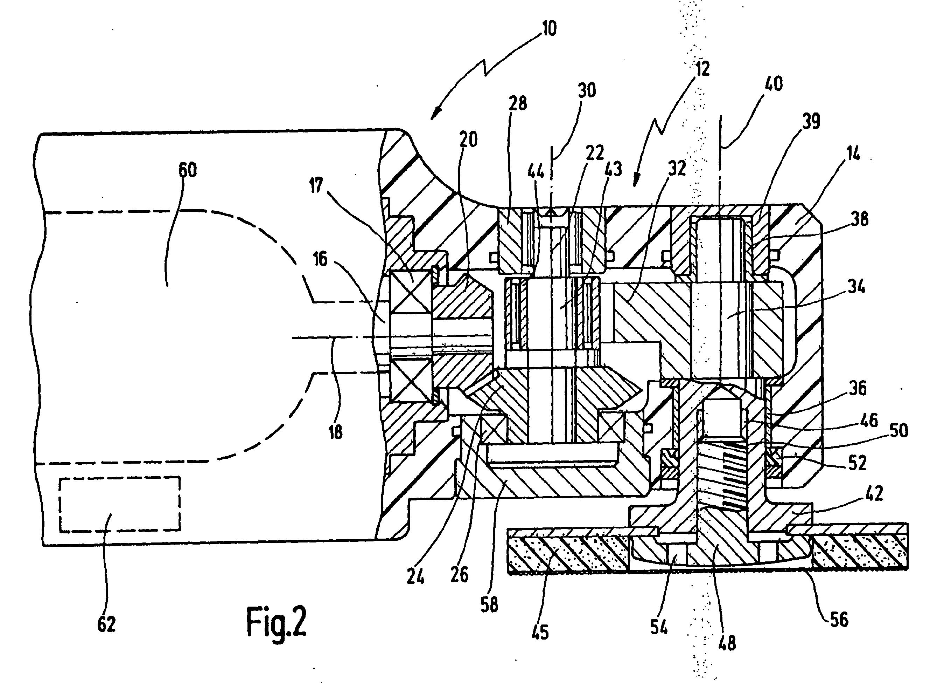

Ein in den Fig. 1 und 2 dargestelltes Elektrowerkzeug ist insgesamt mit der Ziffer 10 bezeichnet. Es handelt sich hierbei um eine handgehaltene Antriebsmaschine, mit Hilfe derer ein auf eine Abtriebswelle des Elektrowerkzeugs 10 aufgesetztes Werkzeug in eine oszillierende Drehschwenkbewegung um die Längsachse der Abtriebswelle versetzt werden kann. Hierbei wird vorzugsweise eine Schwingungsfrequenz zwischen etwa 5000 und 25.000 Schwingungen pro Minute bei einem Verschwenkwinkel zwischen etwa 1° und 5° ermöglicht.

Hierzu ist ein Oszillationsantrieb 12 vorgesehen, der eine Drehbewegung einer rotierenden Antriebswelle 16 in die Schwenkbewegung der Abtriebswelle 34 umsetzt.

Das Grundprinzip ist aus Fig. 1 zu ersehen.

In einem Gehäuse ist die Antriebswelle 16 mittels zweier Lager, von denen ein Lager 17 erkennbar ist, gelagert. Bei der Antriebswelle 16 kann es sich etwa um die Motorwelle eines Universalmotors handeln. Grundsätzlich ist jedoch auch die Verwendung anderer Antriebe, wie etwa pneumatischer Antriebsmotoren oder hydraulischer Antriebsmotoren, denkbar.

Die Rotationsbewegung der Antriebswelle 16 um ihre Längsachse 18 wird über ein Kegelradgetriebe mit zwei miteinander kämmenden Kegelrädern 20, 24 in eine Rotationsbewegung einer Exzenterwelle 22 um deren Längsachse 30 umgesetzt. Dabei stehen die Längsachsen 18 und 30 von Antriebswelle 16 und Exzenterwelle 22 in einem Winkel von 90° zueinander. Die Exzenterwelle 22 ist mittels zweier Lager 26, 28 im Gehäuse 14 gelagert. Der Exzenter ist als zylindrischer Abschnitt auf der Exzenterwelle 22 ausgebildet und gegenüber der Längsachse 30 der Exzenterwelle um ein gewisses Maß, das die Exzentrität ergibt, versetzt angeordnet.

Eine Abtriebswelle 34, die zum Antrieb eines Werkzeugs dient, ist parallel zur Exzenterwelle 22 angeordnet, so dass die Längsachsen 30, 40 von Exzenterwelle 22 und Abtriebswelle 34 parallel zueinander sind. Die Abtriebswelle 34 ist im vorderen Bereich des Gehäuses 14 mittels zweier Lager 36, 38 gelagert und weist an ihrem äußeren, aus dem Gehäuse 14 hervorstehenden Ende einen Aufnahmeflansch 42 zur Befestigung des Werkzeugs auf. Auf der Abtriebswelle 34 ist eine Exzentergabel 32 starr befestigt. Die Exzentergabel 32 weist an ihrem äußeren, der Exzenterwelle 22 zugewandten Ende einen etwa U-förmigen Ausschnitt 33 auf, dessen beide Schenkel 64, 66 zueinander parallel verlaufen (vgl. Fig. 3).

Der Ausschnitt 33 der Exzentergabel 32 ist entweder unmittelbar mit der Außenfläche des zylindrischen Exzenters im Gleiteingriff oder aber im Gleiteingriff mit der zylindrischen Außenfläche eines Lagers, das auf dem Exzenter vorgesehen ist. Beim dargestellten Ausführungsbeispiel ist auf der Außenseite des Exzenters zusätzlich eine zylindrisches Nadellager vorgesehen, das zwischen den beiden Schenkeln des U-förmigen Ausschnitts 33 der Exzentergabel 32 im Gleiteingriff ist.

Die Rotationsbewegung der Antriebswelle 16 wird so über das aus den beiden Kegelrädern 20, 24 gebildete Kegelradgetriebe in die Rotationsbewegung der Exzenterwelle 22 umgesetzt, während die Bewegung des Exzenters über die Exzentergabel 32 in eine oszillierende Schwenkbewegung der Abtriebswelle 34 um deren Längsachse 40 umgesetzt wird. Da Exzenterwelle 22 und Abtriebswelle 34 parallel zueinander angeordnet sind, ergibt sich eine linienförmige Berührung zwischen Exzentergabel und Exzenter bzw. darauf angeordnetem Lager (sofern vorgesehen).

Der nähere Aufbau wird nunmehr an Hand von Fig. 2 erläutert.

Innerhalb des Gehäuses 12 ist ein lediglich rein schematisch mit Ziffer 60 angedeuteter Universalmotor aufgenommen, der ggf. mit einer elektronischen Drehzahlregelung 62, etwa in Form einer Phasenanschnittsteuerung, gekoppelt sein kann. Der Universalmotor 60 weist eine Motorwelle auf, die als Antriebswelle 16 ausgebildet ist. Die Antriebswelle 16 ist auf der dem Exzenter zugewandten Seite in einem Lager 17, etwa einem Kugellager, gelagert. Am Ende der Antriebswelle 16 ist das Kegelrad 20 starr befestigt, das mit dem zweiten Kegelrad 24 kämmt, das auf der Exzenterwelle 22 befestigt ist. Die Exzenterwelle 22 ist auf der Seite des Kegelrades 24 mit einem Lager 26, das als Kugellager ausgebildet sein kann, und auf der gegenüberliegenden Seite mit einem Nadellager 28 gelagert. Das Lager 26 ist mittels eines Befestigungsflansches 58 im Gehäuse 14 montiert. Wie bereits erwähnt ist im mittleren Bereich der Exzenterwelle 22 ein zylindrischer Exzenterabschnitt 43 außermittig angeordnet. Darauf befindet sich ein Nadellager 44, dessen Außenfläche von den beiden Schenkeln 64, 66 des Ausschnittes 33 der Exzentergabel 32 umschlossen ist.

Wie aus Fig. 2 zu ersehen ist, sind die beiden Lager der Abtriebswelle 34 jeweils als Gleitlager 36 bzw. 38 ausgebildet, die unmittelbar im Gehäuse 14 bzw. beim Lager 38 mittels einer Befestigungsbüchse 39 festgelegt sind. Die Abtriebswelle 34 weist eine Gewindesacklochbohrung 46 auf, in die eine Befestigungsschraube 48 eingeschraubt werden kann, um ein Werkzeug 45 zwischen dem Aufnahmeflansch 42 am äußeren Ende der Abtriebswelle 34 und einer Befestigungsschraube 48 einzuspannen.

In Fig. 2 ist beispielhaft als Werkzeug 45 ein Schleifteller dargestellt, an dessen Unterseite eine Befestigungsfläche 56 etwa in Form eines Klettverschlusses vorgesehen sein kann, um darauf etwa ein Schleifpapier lösbar befestigen zu können.

Es versteht sich, dass der Einsatz beliebiger Werkzeuge möglich ist. Dazu gehören u.a. Schleifwerkzeuge, Schneidwerkzeuge, Sägewerkzeuge und dergleichen mehr, die sich sämtlich für einen oszillierenden Antrieb eignen.

Die Befestigungsschraube 48 ist gemäß Fig. 2 als Flansch ausgebildet, der gegen den Aufnahmeflansch 42 verspannbar ist und weist zwei Bohrungen 54 auf, an denen ein Werkzeug zum Betätigen der Befestigungsschraube 48 angesetzt werden kann. Die Abtriebswelle 34 ist gegenüber dem Gehäuse 14 an ihrer Außenseite durch eine Dichtung 52 abgedichtet.

Das Kegelradgetriebe aus den beiden Kegelrädern 20, 24 ist vorzugsweise als Untersetzungsgetriebe ausgebildet, etwa mit einem Untersetzungsverhältnis von 1:1,2 bis 1:4, 'so dass ein herkömmlicher Universalmotor 60 verwendet werden kann, um ohne eine Drehzahlregelung eine Oszillationsfrequenz zwischen etwa 10.000 und 25.000 Schwingungen pro Minute zu erhalten. Zusätzlich kann natürlich eine elektronische Drehzahlsteuerung bzw. Leistungssteuerung 62 vorgesehen sein, sofern dies für besondere Anwendungen notwendig oder erwünscht ist.

## Patentansprüche

1. Oszillationsantrieb mit einer rotierend antreibbaren Antriebswelle (16), von der eine Abtriebswelle (34) zum Antrieb eines Werkzeugs (45) um ihre Längsachse (40) oszillierend antreibbar ist, und mit einem Exzenter (433), der mit ei-ner Exzentergabel (32) zum oszillierenden Antrieb der Abtriebswelle (34) zusammenwirkt, wobei der Exzenter (43) von einer Exzenterwelle (22) rotierend antreibbar ist, die parallel zur Abtriebswelle (34) angeordnet ist, und die Exzentergabel (32) mit einem ersten Ende starr mit der Abtriebswelle (34) verbunden ist und mit einem zweiten Ende am Exzenter (43) geführt ist, der an der Exzenterwelle (22) ausgebildet ist, **dadurch gekennzeichnet, dass** die Exzenterwelle (22) winklig zur Abtriebswelle (16) angeordnet und mit dieser über ein Winkelgetriebe (20,24) gekoppelt ist, wobei die Antriebswelle (16) auf der dem Exzenter (43) zugewandten Seite gelagert ist, und dass das Winkelgetriebe (20, 24) ein Untersetzungsgetriebe mit einem Untersetzungsverhältnis zwischen 1:1,2 und 1:4 ist.

2. Oszillationsantrieb nach Anspruch 1, **dadurch gekennzeichnet, dass** der Exzenter (43) eine zylindrische Außenfläche aufweist, die mit der Exzentergabel (32) zusammenwirkt.

3. Oszillationsantrieb nach Anspruch 1 oder 2, **dadurch gekennzeichnet, dass** das Winkelgetriebe (20, 24) als Kegelradgetriebe ausgebildet ist.

4. Oszillationsantrieb nach einem der vorhergehenden Ansprüche, **dadurch gekennzeichnet, dass** die Antriebswelle (16) von einem Universalmotor (60) antreibbar ist.

5. Oszillationsantrieb nach einem der vorhergehenden Ansprüche, **dadurch gekennzeichnet, dass** das Getriebe als mechanisch schaltbares, gestuftes oder stufenloses Getriebe ausgebildet ist.

6. Oszillationsantrieb nach Anspruch 4 oder 5, **dadurch gekennzeichnet, dass** der Oszillationsantrieb einen Universalmotor (60) mit einer elektronischen Steuerung (62), wie etwa eine Phasenanschnittsteuerung, aufweist.

7. Werltzeugmaschine, insbesondere Elektrohandwerkzeug, mit einem Oszillationsantrieb (12) nach einem der vorhergehenden Ansprüche.

## Claims

1. Oscillatory drive comprising a rotatingly driven drive shaft (16), whereby a driven shaft (34) for driving a tool (45) can be driven oscillatingly about the longitudinal axis (40) thereof, and further comprising an eccentric (43 cooperating with an eccentric fork (32) for oscillatingly driving the driven shaft (34), wherein the eccentric (43) can be driven rotatingly by an eccentric shaft (22) which is arranged in parallel to the drive shaft (34), and wherein the eccentric fork (32) is at a first end thereof connected rigidly with the driven shaft (34) and at a second end is guided by the eccentric (43) which is formed at the eccentric shaft (22), **characterized in that** the eccentric shaft (22) is arranged at an end to the drive shaft (16) and is coupled therewith by an angular gear (20, 22), wherein the drive shaft (16) is supported on the side facing the eccentric (43), and **in that** the angular gear (20, 22) is a reduction gear having a reduction ratio between 1:1.2 and 1:4.

2. The oscillatory drive of claim 1, **characterized in that** the eccentric (43) comprises a cylindrical outer surface which cooperates with the eccentric fork (32).

3. The oscillatory drive of claim 1 or 2, **characterized in that** the angular gear (20, 24) is configured as a bevel gear drive.

4. The oscillatory drive according to any of the preceding claims, **characterized in that** the drive shaft (16) can be driven by a universal motor (60).

5. The oscillatory drive according to any of the preceding claim, **characterized in that** the gear is configured as a mechanically switchable stepped gear or as a continuous gear.

6. The oscillatory drive according to claim 4 or 5, **characterized in that** the oscillatory drive comprises a universal motor (60) and an electronic controller (62), such as a phase controller.

7. Tool machine, in particular handheld electric power tool, comprising an oscillatory drive (12) according to any of the preceding claims.

## Revendications

1. Mécanisme d'entraînement oscillant avec un arbre d'entraînement (16) pouvant être entraîné de manière rotative, par lequel un arbre de sortie (34) pour l'entraînement d'un outil (45) peut être entraîné de manière oscillante autour de son axe longitudinal (40), et avec un excentrique (43) qui coopère avec une fourche d'excentrique (32) pour l'entraînement oscillant de l'arbre de sortie (34), l'excentrique (43) pouvant être entraîné de manière rotat ve par un arbre d'excentrique (22) qui est disposé parallèlement à l'arbre de sortie (34), et la fourche d'excentrique (32) étant reliée avec une première extrémité rigidement à l'arbre de sortie (34) et étant guidée avec une seconde extrémité sur l'excentrique (43) qui est réalisé sur l'arbre d'excentrique (22), **caractérisé en ce que** l'arbre d'excentrique (22) est disposé de manière angulaire à l'arbre d'entraînement (16) et est couplé à celui-ci par un engrenage conique (20, 24), l'arbre d'entraînement (16) étant logé sur le côté tourné vers l'excentrique (43), et **en ce que** l'engrenage conique (20, 24) est un engrenage réducteur avec un rapport de réduction compris entre 1:1,2 et 1:4.

2. Mécanisme d'entraînement oscillant selon la revendication 1, **caractérisé en ce que** l'excentrique (43) présente une surface extérieure cylindrique qui coopère avec la fourche d'excentrique (32).

3. Mécanisme d'entraînement oscillant selon la revendication 1 ou 2, **caractérisé en ce que** l'engrenage conique (20, 24) est réalisé comme un engrenage à pignons coniques.

4. Mécanisme d'entraînement oscillant selon l'une quelconque des revendications précédentes, **caractérisé en ce que** l'arbre d'entraînement (16) peut être entraîné par un moteur universel (60).

5. Mécanisme d'entraînement oscillant selon l'une quelconque des revendications précédentes, **caractérisé en ce que** l'engrenage est réalisé comme un engrenage commutable mécaniquement, étagé ou continu.

6. Mécanisme d'entraînement oscillant selon la revendication 4 ou 5, **caractérisé en ce que** l'entraînement oscillant présente un moteur universel (60) avec une commande (62) électronique telle qu'un réglage de l'angle ce phase.

7. Machine-outil, en particulier outil électrique à main avec un mécanisme d'entraînement oscillant (12) selon l'une quelconque des revendications précédentes.
